# DEMANDE DE BREVET EUROPEEN

(11) **EP 1 596 282 A2**
(43) Date de publication de la demande: **16.11.2005**
(21) Numéro de dépôt: 05290594.0
(22) Date de dépôt: 17.03.2005
(51) Int. Cl.: G06F 9/318

(54) **Dispositif et procédé de gestion d'un jeu d'instructions d'un microprocesseur**

(30) Priorité: 22.03.2004 FR 0402929
(71) Demandeur: STMicroelectronics SA, 92120 Montrouge (FR)
(72) Inventeur: Ferrand, Olivier, 13620 Carry Le Rouet (FR); Gril-Maffre, Jean-Michel, 13090 Aix-en-Provence (FR)
(74) Mandataire: Verdure, Stéphane

(57) **Abrégé**

L'invention concerne un microprocesseur (10) ayant un jeu d'instructions déterminées qui sont codées sur un nombre déterminé P de bits dans un espace de codage d'instructions de taille 2^P. Le microprocesseur comprend un registre de mode (30) ayant un nombre déterminé N de bits de mode, une unité de décodage (28) et une unité d'exécution (12), agencées pour décoder et exécuter une instruction (Iᵢ) donnée selon au moins un premier ou un second mode d'exécution en fonction des valeurs d'un nombre déterminé Qᵢ de bits de mode associés à l'instruction, ladite instruction correspondant à des opérations respectives distinctes dans ledit premier mode d'exécution et dans ledit second mode d'exécution où Qᵢ est un nombre entier strictement positif.

## Description

La présente invention concerne de manière générale la gestion d'un jeu d'instructions d'un microprocesseur.

L'invention concerne plus particulièrement un microprocesseur, ainsi qu'un procédé de commande d'un tel microprocesseur pour modifier la nature des opérations codées par les instructions du jeu d'instructions de ce microprocesseur.

L'invention s'applique plus particulièrement aux microprocesseurs RISC (« Reduced Instruction Set Computer » en anglais) pour lesquels la variété des instructions est limitée par l'architecture matérielle, du fait que les instructions doivent avoir une taille fixe en nombre de bits.

La variété des instructions étant limitée, il arrive que l'utilisateur ait besoin d'utiliser plusieurs instructions pour pouvoir effectuer une seule opération comme par exemple la recopie d'une page mémoire dans un registre. Une telle opération nécessite, par exemple, l'implémentation d'une boucle logicielle où le microprocesseur lit une valeur à une adresse de source dans la mémoire, la recopie à une adresse de destination dans le registre, puis incrémente l'adresse de source et l'adresse de destination, et s'il n'a pas fini de parcourir toutes les adresses de source dans la mémoire, réitère l'exécution des instructions correspondantes.

Pour optimiser la vitesse d'exécution de cette boucle logicielle, on peut penser à rajouter au jeu d'instructions du microprocesseur des instructions, comme par exemple des instructions de lecture et d'écriture avec post-incrémentation ou post-décrémentation des pointeurs qui pointent respectivement sur l'adresse de source et l'adresse de destination. Ceci est possible facilement dans le cadre d'un microprocesseur présentant une architecture CISC (« Complex Instruction Set Computer » en anglais) mais très difficilement réalisable dans le cadre d'un microprocesseur RISC du fait de son jeu d'instructions réduit.

Une telle boucle logicielle contient cinq instructions ce qui est coûteux en terme d'espace mémoire requis pour stocker le programme d'une application mettant en oeuvre la boucle logicielle. Or, on sait qu'un microprocesseur occupe la plus grande partie du temps à exécuter des boucles logicielles pour, généralement, effectuer le même type d'opération spécifique comme celle décrite précédemment par exemple, où uniquement quelques instructions sont utilisées.

De plus, on sait que plus le nombre d'instructions différentes du programme est élevé, plus le nombre des cycles d'instruction pendant lesquels le microprocesseur est monopolisé pour traiter ces instructions est élevé. Ceci ralentit le temps d'exécution du programme par le microprocesseur qui effectue pourtant souvent le même type d'opérations.

Pour palier les inconvénients de l'art antérieur précités, la présente invention propose d'augmenter la variété des instructions du jeu d'instructions du microprocesseur en configurant (ou modifiant) la nature desdites instructions, en particulier en modifiant les opérations codées par lesdites instructions.

De manière plus générale, on prévoit un registre de N bits de mode de manière à indiquer au microprocesseur plusieurs modes d'exécution des instructions.

L'invention concerne ainsi un microprocesseur ayant un jeu d'instructions déterminées qui sont codées sur un nombre déterminé P de bits dans un espace de codage d'instructions.

Le microprocesseur comprend un registre de mode ayant un nombre déterminé N de bits de mode.

Le microprocesseur comprend de plus une unité de décodage et une unité d'exécution, agencées pour décoder et exécuter une instruction donnée selon au moins un premier ou un second mode d'exécution en fonction des valeurs d'un nombre déterminé Qᵢ de bits de mode associés à l'instruction, ladite instruction correspondant à des opérations respectives distinctes dans ledit premier mode d'exécution et dans ledit second mode d'exécution, où Qᵢ est un nombre entier strictement positif.

On augmente ainsi la variété des opérations codées par les instructions sans modifier la taille en nombre de bits des instructions donc le nombre d'instructions distinctes du jeu d'instructions. Tout se passe comme si le jeu d'instructions comprenait des instructions supplémentaires alors que l'espace de codage des instructions reste inchangé.

De plus, grâce à l'invention, on réduit la taille du programme en terme d'espace mémoire requis pour le stocker et on améliore les performances du microprocesseur en terme de rapidité d'exécution.

De préférence, chaque bit de mode est associé à au plus une instruction. Ainsi, on évite les incompatibilités entre des modes d'exécution d'instructions distinctes.

Avantageusement, au moins une instruction de configuration du jeu d'instructions permet d'écrire dans le registre de mode en donnant aux bits de mode des valeurs correspondant au mode d'exécution de l'instruction.

Dans un mode de réalisation, une telle instruction de configuration est une instruction d'initialisation, c'est-à-dire une instruction de mise à la valeur logique « 1 », ayant comme paramètre la valeur de l'adresse du bit de mode à programmer. Une telle instruction n'ayant qu'un seul paramètre peut être codée sur un nombre de bits relativement grand dans une architecture RISC, permettant un jeu d'instructions plus varié.

Dans ce cas, une autre instruction de configuration peut être prévue en tant qu'instruction de réinitialisation, c'est-à-dire une instruction de mise à la valeur logique « 0 », ayant comme paramètre la valeur de l'adresse du bit de mode à programmer.

Dans un autre mode de réalisation, l'instruction de configuration est une instruction de chargement ayant comme paramètres la valeur de l'adresse du bit de mode à configurer et la valeur (0 ou 1) à donner audit bit de mode. Une seule instruction est alors suffisante pour programmer un bit de mode. D'un autre côté, elle est codée sur un nombre P de bits relativement plus faible dans une architecture RISC, ce qui limite le nombre d'instructions du jeu d'instructions.

Dans un mode de réalisation où l'invention est particulièrement avantageuse, le microprocesseur présente une architecture RISC.

Avantageusement, le registre de mode peut être interne au microprocesseur. Les temps d'accès sont réduits, ce qui accélère l'exécution des programmes.

L'invention concerne également un procédé de gestion d'un microprocesseur du type décrit précédemment, le procédé comprenant une étape suivant laquelle l'unité d'exécution exécute une instruction donnée selon au moins un premier ou un second mode d'exécution en fonction des valeurs d'un nombre déterminé Qᵢ de bits de mode associés à l'instruction, ladite instruction correspondant à des opérations respectives distinctes dans ledit premier mode d'exécution et dans ledit second mode d'exécution, où Qᵢ est un nombre entier strictement positif.

D'autres particularités et avantages de la présente invention apparaîtront dans la description ci-après d'exemples de réalisation non limitatifs, en référence aux dessins annexés, dans lesquels :

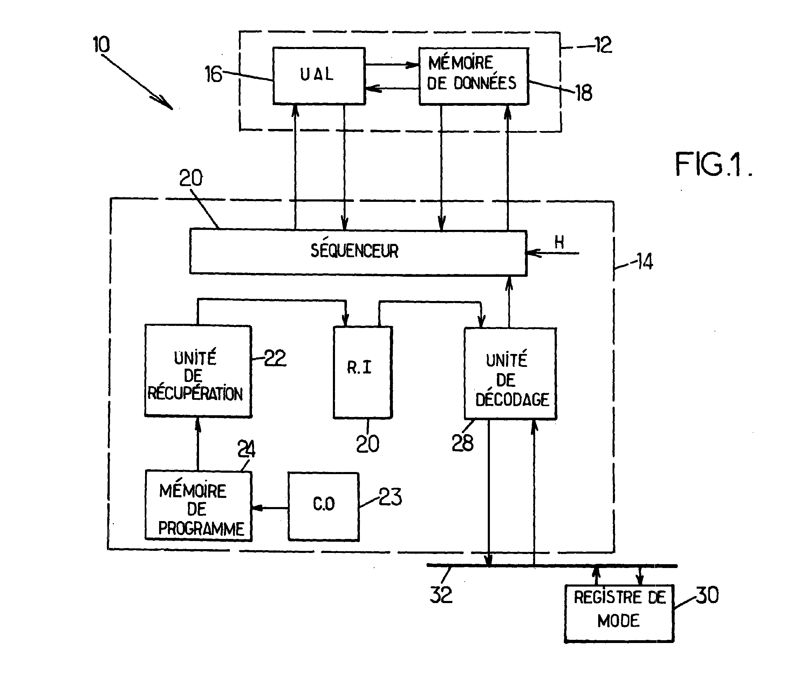

- la figure 1 est un schéma fonctionnel illustrant un mode de réalisation d'un microprocesseur selon la présente invention ;
- la figure 2 illustre une portion de registre de mode selon un mode de réalisation de la présente invention ;
- la figure 3 illustre un exemple d'une portion de programme pour stocker des valeurs dans un registre à partir d'une mémoire selon un mode de réalisation de la présente invention ;
- la figure 4 illustre un exemple d'une portion de programme pour stocker
des valeurs dans un registre à partir d'une mémoire selon une méthode connue de l'état de la technique.

Le microprocesseur 10 comprend une unité d'exécution 12 qui comporte une unité arithmétique et logique 16 (UAL) pour effectuer des opérations élémentaires comme des additions, des multiplications ou autres et qui comprend des unités logiques effectuant les opérations élémentaires comme des additionneurs, des multiplieurs ou autres, chaque opération élémentaire étant codée par une instruction du jeu d'instructions du microprocesseur.

L'unité d'exécution 12 comporte de plus une mémoire de données 18, comme par exemple des registres ou/et des mémoires, pour stocker des données propres aux différentes opérations élémentaires effectuées comme par exemple le résultat d'une opération élémentaire.

Le microprocesseur 10 comprend une unité de commande 14 pour interpréter les instructions d'un programme en cours d'exécution et pour commander l'unité arithmétique et logique 16 en conséquence.

L'unité de commande 14 comporte par exemple :
- un séquenceur 20 qui génère, au rythme des cycles d'un signal d'horloge H, des signaux de commande délivrés aux différentes unités logiques de l'unité de calcul 12 qui participent à l'exécution d'une instruction donnée;
- une unité de récupération 22 (« fetch unit » en anglais) qui récupère une instruction à exécuter à partir d'une mémoire de programme 24 dans laquelle le programme est stockée, comme par exemple une mémoire de type ROM (« Read Only Memory » en anglais), Flash EPROM (« Erasable Programmable Read/Only Memory » en anglais) ou EEPROM (« Electrical EPROM » en anglais) ;
- un compteur ordinal 23 (CO) qui est un registre stockant l'adresse de la prochaine instruction à exécuter ;
- un registre d'instructions 26 pour stocker séquentiellement les instructions à exécuter ;
- une unité de décodage 28 pour interpréter et décoder les instructions à exécuter et déterminer, en réponse au décodage, les opérations élémentaires à effectuer, plus précisément déterminer les unités logiques à commander pour effectuer ces opérations élémentaires.

Le microprocesseur 10 comprend de plus un registre de mode 30 de N bits, appelés bits de mode, le registre de mode 30 étant interne ou externe au microprocesseur 10 et N étant un nombre entier strictement positif.

Le microprocesseur 10 comprend également un bus 32 pour lire les valeurs des bits de mode du registre de mode 30 et pour transmettre les valeurs lues à l'unité de décodage 28.

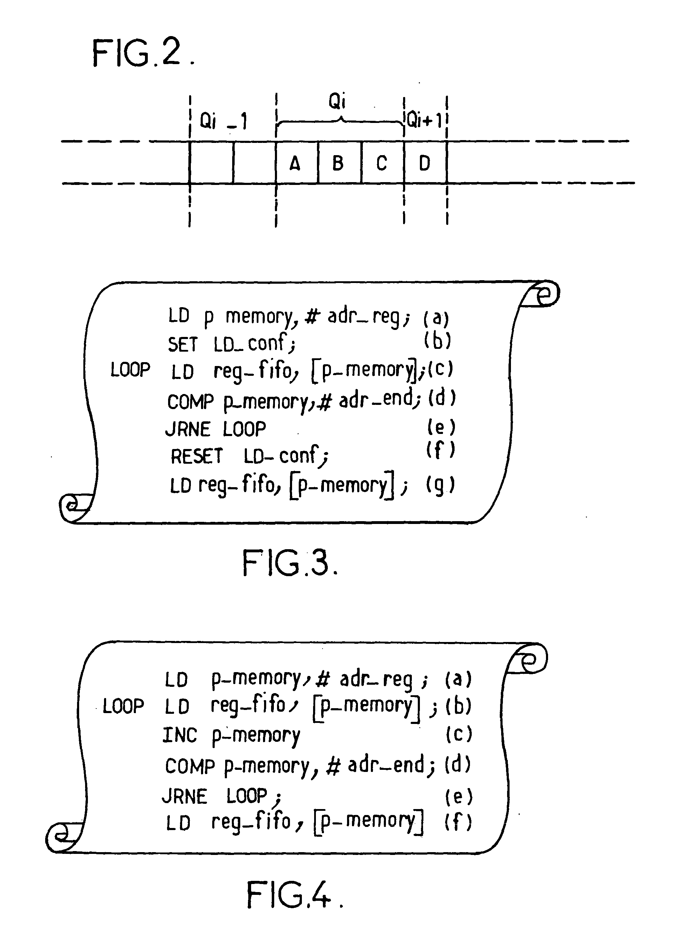

Chaque instruction « lᵢ » est associée à Qᵢ bits de mode tel qu'illustré à la figure 2 où Qᵢ est un nombre entier strictement positif. Dit autrement, chaque instruction est exécutée selon au moins un premier et un second mode d'exécution pour lesquels l'instruction code des opérations distinctes. Dit autrement, ia nature de l'instruction est distincte d'un mode à l'autre.

Ainsi, l'état des Qᵢ bits de mode indique au microprocesseur 10, en particulier à l'unité de décodage 28, le mode d'exécution de l'instruction « lᵢ » à mettre en oeuvre.

Par exemple, ainsi qu'il est illustré à la figure 2, l'instruction « lᵢ » est associée aux Qi bits de mode, à savoir trois bits dont A, B et C. Une telle instruction « lᵢ » peut ainsi être exécutée selon au plus 2^3 modes d'exécution. Le nombre maximum de modes d'exécution de cette instruction sont bien sûr défini par le concepteur.

De même, l'instruction « lᵢ₊₁ » est associée au Qᵢ₊₁ bit de mode, c'est-à-dire le bit D. L'instruction « Iᵢ₊₁ » peut ainsi être exécutée selon au plus 2^1 modes d'exécution.

Tout se passe donc comme si l'on avait des instructions supplémentaires dans le jeu d'instructions du microprocesseur, alors qu'en réalité le nombre d'instructions du jeu d'instructions reste fixe.

En effet, pour une instruction donnée « lᵢ » codée sur un nombre déterminé P de bits dans un espace de codage d'instructions de taille 2^P et associée à un nombre Qᵢ de bits de mode, le jeu d'instructions est assimilable à un jeu d'instructions auquel on a ajouté 2∧^{Qi}-1 instructions. Bien entendu, le nombre maximum d'instructions distinctes du jeu d'instructions est en réalité toujours égal à 2^P.

Dit autrement, on peut augmenter la variété des opérations codées par chaque instruction sans pour autant augmenter ia taille en nombre de bits de ladite instruction, laquelle doit rester fixe dans le cadre des microprocesseurs RISC.

Pour modifier le mode d'exécution de l'instruction « lᵢ », une instruction de configuration permet de modifier les valeurs des Qᵢ bits de mode associés à ladite instruction.

Dans un mode de réalisation, la programmation des bits de mode peut s'effectuer via une instruction d'initialisation « SET » et/ou une instruction de réinitialisation « RESET » ayant l'adresse du bit de mode comme valeur spécifiée en paramètre. Par exemple, l'instruction d'initialisation met à la valeur logique « 1 » l'état d'un bit de mode et l'instruction de réinitialisation met à la valeur logique « 0 » l'état du bit de mode.

Dans un autre mode de réalisation, l'instruction de configuration est une instruction de chargement ayant comme paramètres d'entrée l'adresse du bit de mode dont on souhaite modifier l'état et la valeur de l'état que l'on souhaite lui donner.

Ainsi, pour connaître le mode d'exécution de l'instruction « lᵢ », l'unité de décodage 28 est configurée en mode lecture du registre de mode. Elle lit par l'intermédiaire du bus 32 les valeurs des Qᵢ bits de mode associés à l'instruction « lᵢ » en cours de décodage et destinée à être exécutée.

En fonction des valeurs des Qᵢ bits de mode, l'unité de décodage 28 et l'unité d'exécution 12 mettent en oeuvre le mode d'exécution approprié de l'instruction « lᵢ ». Le mode d'exécution déterminé est mis en oeuvre tant que les valeurs des Qᵢ bits de mode restent inchangées.

La sélection des bits de mode à lire par l'unité de décodage 28, c'est-à-dire les Qᵢ bits de mode associés à l'instruction « lᵢ » en cours de décodage est réalisée par le décodage du code de ladite instruction. En particulier, le décodage du code de l'instruction « lᵢ » indique à l'unité de décodage 28 les valeurs des Qᵢ bits de mode à lire.

La figure 3 illustre un exemple d'une portion de programme pour stocker des données dans un registre à partir de données stockées dans une mémoire selon un mode de réalisation de la présente invention.

L'objet de cette portion de programme est de stocker le contenu d'une mémoire dans un registre FIFO référencé « reg_fifo » dans le programme par l'intermédiaire d'une boucle logicielle comprenant une instruction de chargement référencée « LD » dans le programme et pour laquelle on souhaite modifier la nature de l'opération qu'elle code et dont le bit de mode associé est référencé « LD_conf » dans le programme.

L'adresse de début et l'adresse de fin de la mémoire sont respectivement référencées « adr_beg » et « adr_end »dans le programme. L'adresse de la mémoire est pointée par le pointeur référencé « p_memory » dans le programme.

Pour stocker les données de la mémoire, on parcourt toutes les adresses de ladite portion de la mémoire en incrémentant l'adresse pointée par le pointeur « p_memory ».

Par comparaison, une instruction d'incrémentation INC peut aussi être utilisée pour incrémenter l'adresse pointée par le pointeur ainsi qu'il est illustré à la figure 3 (ligne « j »). Dans cet exemple, l'instruction d'incrémentation est traitée à chaque itération de la boucle logicielle, ce qui monopolise un cycle de signal d'horloge pour le traitement de ladite instruction par l'unité de commande et ce qui est coûteux en terme d'espace mémoire stockant le programme.

Par la présente invention, on s'affranchit des contraintes précitées en modifiant la nature de l'opération codée dans l'instruction de chargement. Plus précisément, on indique au microprocesseur 10, en particulier l'unité de décodage 28, que l'instruction de chargement est une instruction de chargement post-incrémentée, c'est-à-dire que pour chaque itération de la boucle logicielle, l'adresse de la mémoire pointée par le pointeur « p_memory » est automatiquement incrémentée.

Le programme comprend ainsi une instruction d'initialisation « SET » pour initialiser le bit de mode référencé « LD_conf » associé à l'instruction de chargement. Par exemple, l'instruction d'initialisation met la valeur du bit de mode à la valeur logique « 1 ».

Ainsi, lors du décodage de l'instruction de chargement pour chaque itération de la boucle logicielle, l'unité de décodage lit l'état du bit de mode associé dans le registre de mode pour déterminer selon quel mode d'exécution, l'instruction de chargement doit être exécutée.

La nature de l'opération codée par l'instruction de chargement est modifiée et comprend en plus de sa fonction initiale, à savoir charger une donnée dans un espace mémoire (ici un registre), la fonction de post-incrémentation de l'adresse de la mémoire pointée par le pointeur « p_memory ».

Lorsque toutes les données sont copiées à partir de la mémoire dans le registre, une instruction de réinitialisation « RESET », est exécutée pour réinitialiser le bit de mode de l'instruction de chargement et pour indiquer au microprocesseur qu'il peut à nouveau exécuter l'instruction de chargement selon le mode d'exécution normal. Par exemple, l'instruction de réinitialisation met la valeur du bit de mode à la valeur logique « 0 ».

Plus précisément, dans la suite de l'exécution du programme, l'opération codée par l'instruction de chargement a pour fonction de charger des données dans un emplacement spécifique mais ne réalise plus la fonction de post-incrémentation.

On comprend ici un avantage de l'invention selon lequel le programme est de taille réduite et de temps d'exécution réduit par rapport à la méthode de la figure 4.

Par exemple, pour stocker 1000 valeurs dans le registre à partir de 1000 valeurs stockées dans la mémoire selon la méthode de l'état de la technique à l'aide d'une boucle logicielle, le microprocesseur exécute 4002 opérations, tandis que selon le mode de réalisation de la présente invention, le microprocesseur exécute 3004 opérations soit une réduction de 25% des opérations à exécuter par le microprocesseur et par conséquent une augmentation des performances dudit microprocesseur en terme de rapidité d'exécution du programme. Cet avantage est d'autant plus intéressant que les microprocesseurs exécutent un très grand nombre de boucles logicielles de ce type.

Bien entendu, le mode de réalisation donné ci-dessus à titre d'exemple n'est pas limitatif. Il est possible de modifier la nature des opérations de chaque instruction du jeu d'instructions du microprocesseur, chaque instruction pouvant être exécutée selon plusieurs modes d'exécution. Par exemple, dans l'exemple décrit précédemment, il est possible d'affecter également à l'instruction de chargement la fonction de chargement avec post-décrémentation.

De plus, la taille en nombre de bits des instructions du microprocesseur n'est pas limitative et peut prendre n'importe quelle valeur, par exemple 8 bits, 16 bits, 32 bits ou plus.

## Revendications

1. Microprocesseur (10) ayant un jeu d'instructions déterminées qui sont codées sur un nombre déterminé P de bits dans un espace de codage d'instructions de taille 2^P, et comprenant :
- un registre de mode (30) ayant un nombre déterminé N de bits de mode ;
- une unité de décodage (28) et une unité d'exécution (12), agencées pour décoder et exécuter une instruction (lᵢ) donnée selon au moins un premier ou un second mode d'exécution en fonction des valeurs d'un nombre déterminé Qᵢ de bits de mode associés à l'instruction, ladite instruction correspondant à des opérations respectives distinctes dans ledit premier mode d'exécution et dans ledit second mode d'exécution où Qᵢ est un nombre entier strictement positif.

2. Microprocesseur selon la revendication 1, dans lequel chaque bit de mode est associé à au plus une instruction du jeu d'instructions.

3. Microprocesseur selon la revendication 1, dans lequel le jeu d'instructions comprend au moins une instruction de configuration du jeu d'instructions qui permet de configurer le registre de mode en donnant aux bits de mode des valeurs correspondant au mode d'exécution de l'instruction (lᵢ).

4. Microprocesseur selon la revendication 3, dans lequel une instruction de configuration est une instruction d'initialisation ayant comme paramètre la valeur de l'adresse du bit de mode à programmer.

5. Microprocesseur selon la revendication 4, dans lequel une autre instruction de configuration est une instruction de réinitialisation ayant comme paramètre la valeur de l'adresse du bit de mode à programmer.

6. Microprocesseur selon la revendication 3, dans lequel une instruction de configuration est une instruction de chargement ayant comme paramètres la valeur de l'adresse du bit de mode à programmer et la valeur à donner audit bit.

7. Microprocesseur selon l'une quelconque des revendications précédentes, présentant une architecture RISC.

8. Microprocesseur selon l'une quelconque des revendications précédentes, dans lequel le registre de mode est interne au microprocesseur.

9. Procédé de gestion d'un microprocesseur (10) ayant un jeu d'instructions déterminées qui sont codées sur un nombre P déterminé de bits dans un espace de codage d'instructions de taille 2^P, et comprenant :
- un registre de mode (30) ayant un nombre déterminé N de bits de mode ;
- une unité de décodage (28) et une unité d'exécution (12), agencées pour décoder et exécuter des instructions données ;
le procédé comprenant la étape suivant laquelle l'unité d'exécution (12) exécute une instruction (lᵢ) selon au moins un premier ou un second mode d'exécution en fonction des valeurs d'un nombre déterminé Qᵢ de bits de mode associés à l'instruction, ladite instruction correspondant à des opérations respectives distinctes dans ledit premier mode d'exécution et dans ledit second mode d'exécution où Qᵢ est un nombre entier strictement positif.

10. Procédé selon la revendication 9, comprenant en outre une étape de configuration du registre de mode via une instruction de configuration en donnant aux bits de mode des valeurs correspondant au mode d'exécution de l'instruction (lᵢ).

11. Procédé selon la revendication 10, suivant lequel une instruction de configuration est une instruction d'initialisation ayant comme paramètre la valeur de l'adresse du bit de mode à programmer.

12. Procédé selon la revendication 11, suivant lequel une autre instruction de configuration est une instruction de réinitialisation ayant comme paramètre la valeur de l'adresse du bit de mode à programmer.

13. Procédé selon la revendication 10, suivant lequel une instruction de configuration est une instruction de chargement ayant comme paramètres la valeur de l'adresse du bit de mode à programmer et la valeur à donner audit bit.
